# EUROPEAN PATENT SPECIFICATION

(11) **EP 2 069 120 B1**
(45) Date of publication and mention of the grant of the patent: **19.12.2012**
(21) Application number: 07804984.8
(22) Date of filing: 26.09.2007
(51) Int. Cl.: B28B 13/02, B29C 31/02, B30B 15/30

(54) **DISTRIBUTOR MEANS, APPARATUS AND METHOD FOR PRODUCING A DECORATED CERAMIC PRODUCT**
VERTEILER, VORRICHTUNG UND VERFAHREN ZUR HERSTELLUNG EINES VERZIERTEN KERAMIKPRODUKTS
DISTRIBUTEUR, APPAREIL ET PROCÉDÉ DESTINÉ À PRODUIRE UN PRODUIT EN CÉRAMIQUE DÉCORÉ

(30) Priority: 26.09.2006 IT MO20060295
(43) Date of publication of application: 17.06.2009
(73) Proprietor: Gruppo Concorde S.p.A., 41042 Spezzano di Fiorano Modenese Modena (IT)
(72) Inventor: ISEPPI, Oscar, 41026 Pavullo nel Frignano (MO) (IT); RUINI, Paolo, 41042 Fiorano Modenese (MO) (IT)
(74) Representative: Crugnola, Pietro
(86) International application number: PCT/IB2007/002813
(87) International publication number: WO 2008/038115

(56) References cited:
- EP-A- 0 605 930
- WO-A-2004/071733
- WO-A-2005/068146
- WO-A-2005/097447

## Description

The invention concerns an apparatus and a method for producing a ceramic product, specifically, a tile, having decorations imitating the veining of natural stones according to the pre-amble of claim 1, respectively to the preamble of claim 14.

In the ceramic field, apparatuses and methods are known for producing tiles in which the exposed face is made in such a way as to simulate the veining of natural stones. These apparatuses comprise a conveyor belt on which a first layer of ceramic material powder is deposited by means of a first hopper for forming the base portion of the tiles. A second layer formed of ceramic material powders having various colours is deposited on this first layer for creating the exposed face of the tiles. For producing this second layer, ceramic powders of different colours are unloaded separately into a collector in which they are kept separate by means of walls which divide the internal cavity of the collector into non-communicating compartments. The various coloured ceramic powders flow out of the collector separately through an equal number of tubes, one for each colour, and are unloaded into a second hopper. The latter is placed above a dispensing device which is, in turn, above the conveyor belt and positioned downline of the first hopper. The second hopper is moved horizontally while it unloads the coloured ceramic powders into the dispensing device below it. In this manner, the various coloured powders fill a cavity included in the dispensing device and form in the latter a plurality of reciprocally overlapping layers having variable colour, thickness and extension. Consequently, as the conveyor belt moves forwards gradually and the dispensing device deposits the coloured ceramic powders on the first layer, the latter produce the second layer, comprising a plurality of striations having various shapes and colours. In the exposed face of the finished product, i.e. the fired tile, the afore-mentioned striations are intended to simulate the coloured and irregular veining of natural stones. One disadvantage of the apparatus described above is that the veining that can be obtained is substantially broad and rather repetitive. It is therefore significantly difficult to obtain ceramic tiles in which the exposed face effectively reproduces the variety of shapes and dimensions of the veining of natural stones, by using a known type of apparatus. Specifically, it is not possible to reproduce thin veining, due to stratification processes, visible in natural stones.

WO2005068146 discloses a plant (1) for prearranging powders (33) for forming ceramic tiles or slabs, comprising means (3) for feeding the powders (33), a hopper (34), and a movable fall-on surface (2, 200, 250) positioned bellow the hopper (34), to receive the powders (33) discharged from the hopper (34) and advance them along an advancement direction. The hopper (34) presents a prismatic shape having a front face (43a) and a rear face (34b) which lie opposite each other transverse to the advancement direction of the fall-on surface (2, 200, 250), the distance (B) between said faces (43a, 34b) being substantially equal to the thickness (S) of the powder strip (100, 100') to be compacted deposited on said surface (2, 200), said powder strip (100, 100') reproducing the same arrangement as the mixture of powders (33) within the hopper (34).

EP0605930 discloses a distributor means according to the preamble of claim 1 and a method for manufacturing dry-moulded ceramic tiles having effects of veining distributed in the ceramic body according to the preamble of claim 14. The method comprises forming a mass of granules or powders with stream tubes flowing distinctly at least in the upper part of said mass, extracting by gravity from the bottom of the mass a layer of powder by means of separate, selected feed-apertures. The plant comprises a hopper (11) containing the powders fed by an alternative distributor (28) having at least two feeding ducts. A grid (10) is slidably mounted below the hopper for feeding the die-matrix (12, 13) by means of a plurality of baffles defining the feed-apertures for the powder.

WO2004071733 discloses a method for forming ceramic tiles or slabs in a continuous press, comprising the hollowing operative steps: arranging a hopper, driven with reciprocating movement, above a conveyor belt; depositing in the hopper in a prearranged and/or random manner a mixture of powders of different characteristics in such a manner as to create in the hopper a mass of powders presenting veining peculiar to a single block of natural stone; from said mass of powders, withdrawing in succession portions having, in the belt advancement direction, a dimension equal to a fraction of the dimension of said hopper in the same direction and, in the direction perpendicular to the preceding, the same dimension as the hopper mouth, such as to withdraw an entire layer of said mass; depositing said layer onto said belt, and pressing the powders by a continuous pressing system.

WO2005097447 discloses an apparatus comprising container means (26) provided with an inlet opening (28) through which a plurality of ceramic materials (29) can be distributed inside said container means (26) according to a defined decorative pattern and an outlet opening (30; 49; 45) through which said plurality of ceramic materials (29) can exit towards a transfer surface (39) arranged to transfer said plurality of ceramic materials (29) to a compacting device, said container means (26) being shaped in such a way that said plurality of ceramic materials (29) is arranged on said transfer surface (39) substantially according to said decorative pattern.

One object of the invention is to improve the known apparatuses and methods for producing ceramic products, specifically, tiles.

Another object is to improve the known apparatuses and methods for producing ceramic products, specifically tiles, having exposed faces reproducing the appearance of natural stones.

A further object is to provide an apparatus and a method for producing ceramic products, specifically tiles, which make it possible to obtain fine and irregular veining in the exposed face of the products.

A still further scope is to provide an apparatus and a method for producing ceramic products, specifically tiles, in which the exposed face reproduces the stratification visible in natural stones effectively

In a first aspects of the invention, a distributor means is provided as defined in claim 1.

In a second aspect of the invention, a method is provided for producing ceramic products, as defined in claim 14.

Owing to these aspects, an apparatus and a method are made available for forming ceramic products, specifically tiles, which make it possible to obtain fine and irregular veining in the exposed face of the products, so as to effectively reproduce the stratification visible in natural stones.

In fact, in the apparatus and method according to the invention, the ceramic material powders of different colours are fed separately into a collector. Each coloured ceramic material powder comes out of a corresponding compartment of the collector through a plurality of outlet means, in the form of tubes, to which an equal number of conveyor ducts are connected, having a substantially reduced diameter and unloading the ceramic materials in the distributor means. The distributor means comprises a hopper moved horizontally in relation to the dispensing means. These movable distributor means move and/or stop in predefined positions and for predefined times above the dispensing means, unloading the coloured ceramic materials into the latter in such a way that each coloured ceramic material forms a plurality of thin and irregular layers. Fine and irregular striations significantly similar to the veining of natural stones correspond to this plurality of layers in the exposed face of the finished tile.

Moreover, since the mobile distributor means work in such a way as to fill the dispensing means only partly, the pigmented particles of the ceramic materials are induced to flow obliquely, from the top downwards, inside the dispensing means, thus contributing to obtaining thin and irregular coloured layers. It thus becomes possible to effectively reproduce the veining and, specifically, the typical stratifications of natural stones.

Owing to the invention, distributor means are provided which, by making it possible to obtain a plurality of thin and irregular veining in the exposed face of the products, are found to be significantly effective in reproducing the stratifications visible in natural stones. In one embodiment, the distributor means comprises a pair of distributor units which are positioned near opposite ends of the hopper portion and separately receive the plurality of conveyor ducts. The coloured ceramic materials are unloaded alternatively, in one or the other of the two distributor units, and therefore in one or the other of the apposite ends of the hopper portion. The distributor means thus makes it possible to fill the dispensing means only partly and the pigmented particles of the ceramic materials are induced to flow obliquely, from the top downwards, inside the dispensing means, thus contributing to obtaining thin and irregular coloured layers. Moreover, the flowable ceramic materials flow out of the distributor units through slot-shaped openings which make it possible to form significantly thin layers of pigmented particles. By overlapping the various thin layers, it is possible to reproduce on the exposed face of a ceramic product a chromatic stratification effect extremely similar to the stratifications visible in natural stones.

The invention will be better understood and carried into effect with reference to the attached drawings, in which some embodiments are shown by way of non-limiting example, in which:
Figure 1 is an interrupted and incomplete schematic lateral view showing an apparatus for the production of ceramic products, comprising dispensing means, movable distributor means and a plurality of conveyor ducts supplying the movable distributor means;
Figure 2 is an interrupted and incomplete perspective view showing the distributor means and the respective conveyor ducts of the apparatus of Figure 1;
Figure 3 is a perspective schematic view showing the dispensing means and the movable distributor means in operation;
Figure 4 is a schematic plan view showing distributor means provided with distributor units;
Figure 5 is a schematic lateral view of the distributor means of Figure 4;
Figure 6 is a schematic plan view of one of the distributor units included in the distributor means of Figure 4;
Figure 7 is a partially sectioned, schematic lateral view of the distributor unit of Figure 6 ;

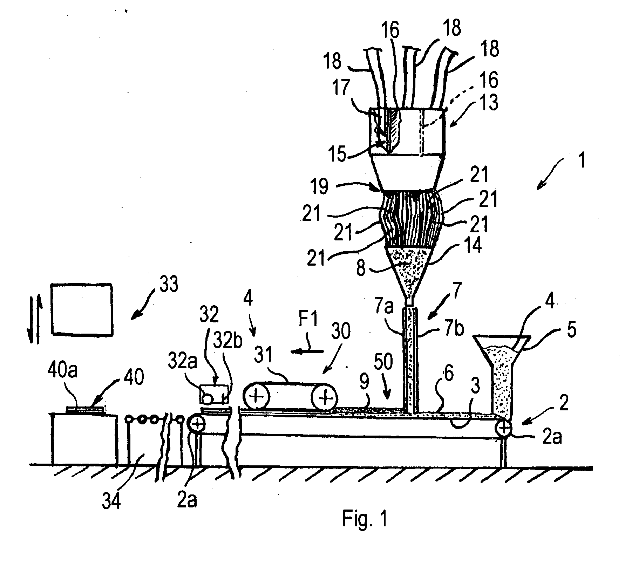

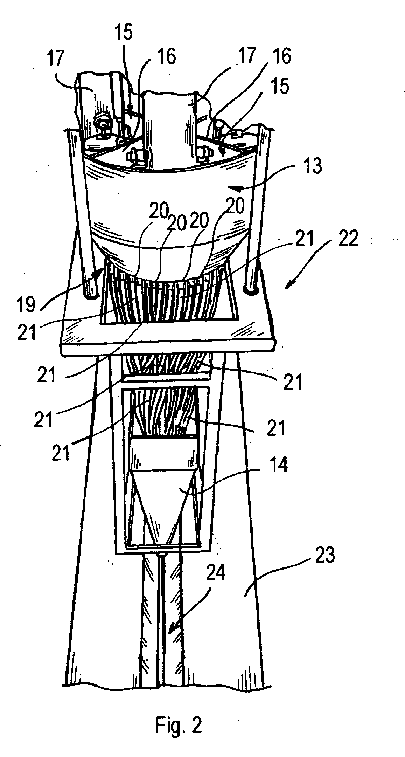

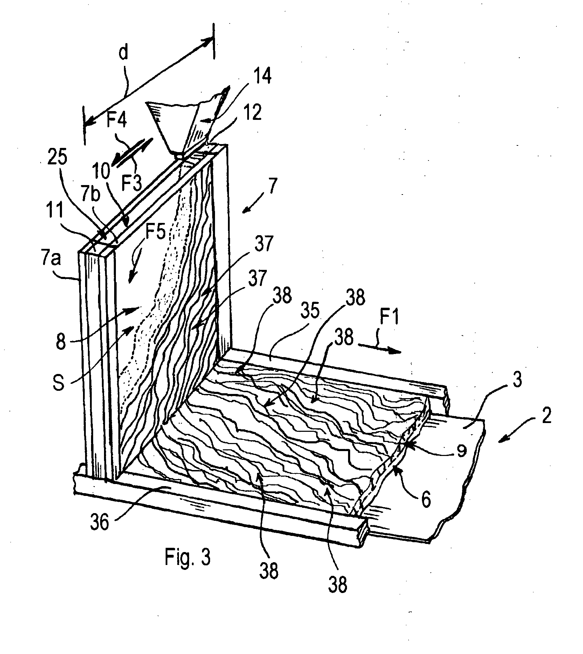

Figures 1 to 3 show an apparatus 1. for forming ceramic products, specifically tiles 40. Apparatus 1 comprises a known type of belt conveyor 2, on the upper branch 3 of which a base layer 6 of ceramic material powder 4, having a prefixed and constant thickness is deposited by gravity by a known type of hopper 5, arranged near one of rollers 2a of belt conveyor 2. Belt conveyor 2, which is provided with a pair of side panels 35, 36 (Figure 3) for preventing ceramic material powder 4 from flowing out on the sides, conveys the base layer 6 in a feed direction indicated by arrow F1, so as to bring base layer 6 near a dispenser frame 7, above the upper branch 3. Dispenser frame 7 is arranged for depositing coloured ceramic material powders 8 by gravity on base layer 6, so as to form on the latter an exposed layer 9 having a prefixed and constant thickness. Dispenser frame 7 (Figure 2), arranged at right angles to feed direction F1, comprises a wall upline 7a and a wall downline 7b, parallel to each other and supported by a pair of lateral columns 11, 12. The wall upline 7a and the wall downline 7b are shaped in the form of a quadrilateral and made of a rigid material, made and/or treated in such a way that the coloured ceramic powders 8 do not adhere to them accidentally. The wall upline 7a is made of non-stick steel, for example, steel with polytetrafluoroethylene (PTFE) coating, while the wall downline 7b is made of a suitable transparent material such as glass or polymethyl methacrylate (PMMA).

In one embodiment (not shown), both walls of dispenser frame 7 are made of rigid and transparent material.

In another embodiment (not shown), both walls of dispenser frame 7 are made of rigid and opaque material.

The two walls 7a, 7b are spaced from each other to define a cavity 25, having constant thickness and closed on the sides by the pair of lateral columns 11, 12. The latter, together with the walls 7a, 7b, define a dispensing opening (not shown), facing belt conveyor 2, and a feed opening 10, opposite the dispensing opening.. Dispenser frame 7 is positioned in relation to the upper branch 3 of conveyor belt 2 in such a way that the delivery opening is arranged near base layer 6. In this way, when dispenser frame 7 dispenses the coloured ceramic powders 8, the latter are deposited on the base layer 6 and form the exposed layer 9.

Dispenser frame 7 is fed with coloured ceramic powders 8 by means of a collector 13, placed above dispenser frame 7, and a movable hopper 14, placed between the collector 13 and dispenser frame 7. In collector 13, which is substantially cylindrical-conical in shape, a plurality of compartments 15 are made (four, in the version seen in Figure 2) separated from one another by a plurality of walls 16. Each of the compartments 15 supplies the movable hopper 14 below it with a coloured ceramic powder 8 of a predefined colour, and the latter is unloaded into the corresponding compartment 15 by a corresponding feed tube 18 provided at its end with a known type of dispensing device 17, having with a gate closure.

Each compartment 15 is provided with a plurality of rigid outlet ducts 20 of small size, projecting from a base portion 19 of collector 13 in the direction of the movable hopper 14 below. Each outlet duct 20 is connected to a flexible outlet tube 21, having diameter similar to that of the corresponding outlet duct 20. The length of each outlet tube 21 is such as to be able to reach the movable hopper 14 and be received in the latter.

Collector 13 and the movable hopper 14 below it are mounted on the same movable frame 22, which, owing to the known hype of driving means (not shown), can be moved horizontally in two directions, indicated by arrows F3 and F4, opposite to each other and parallel to feed opening 10 of dispenser frame 7. The latter is also provided with a guide plate 23 (Figure 2) near feed opening 10, in an approximately median portion of which a longitudinal feed slit 24 is made.

When Apparatus 1 is in operation, the feed tubes 18 unload the various coloured ceramic powders 8 into the respective compartments 15 of collector 13, in prefixed quantities at predefined times. The coloured ceramic powders 8 flow out separately from compartments 15 through the corresponding outlet ducts 20 and flow through outlet tubes 21 separately to enter movable hopper 14. The various coloured ceramic powders 8 are mixed in the movable hopper 14, while the latter, together with the collector 13 above it, slides alternately along the two directions F3 and/or F4 in a predefined manner. This means that the movable hopper 14 can move through a predefined distance, substantially corresponding to a transverse dimension of feed opening 10 of dispenser frame 7, in direction F3 and/or F4. The movable hopper 14 can also stop for predefined times near prefixed areas of feed opening 10. The coloured ceramic powders 8 flow out of movable hopper 14 by gravity, cross the feed slit 24 of guide plate 23 and enter cavity 25 of dispenser frame 7 through its feed opening 10.

As shown in Figure 3, if movable hopper 14 stops for a predefined time near one of the lateral columns, for example, the lateral column 12, the coloured ceramic powders 8 fall into cavity 25 and accumulate one on top of the other in a substantially asymmetric manner, thus filling cavity 25 only partly. In this manner, a flow area S is formed in cavity 25, arranged obliquely and corresponding to a surface free of coloured ceramic powders 8 between feed opening 10 and the lateral column situated in a position opposite to movable hopper 14 (in the case shown in Figure 3, lateral column 11). When the pigmented particles forming each coloured ceramic powder 8 fall from movable hopper 14 on flow area S, they flow obliquely on the latter, from the top downwards, according to a direction indicated by arrow F5. ' The flow area S and the fact that the coloured ceramic powders 8 reach the movable hopper 14 after they have been distributed between the numerous outlet tubes 21 co-operate to produce in cavity 25 a plurality of coloured layers. 37, which are reciprocally overlapping, thin and extremely variable from one another in shape, length and colour. In this manner, when dispenser frame 7 dispenses the exposed layer 9 on base layer 6, the exposed layer 9 has a plurality of veinings 38 which derive from the corresponding coloured layers 37 and which, like the latter, are thin and vary in colour and length. This makes it possible to obtain tiles 40 having an exposed face 40a reproducing in a significantly faithful manner the aesthetic appearance and, specifically, the stratifications of natural stones.

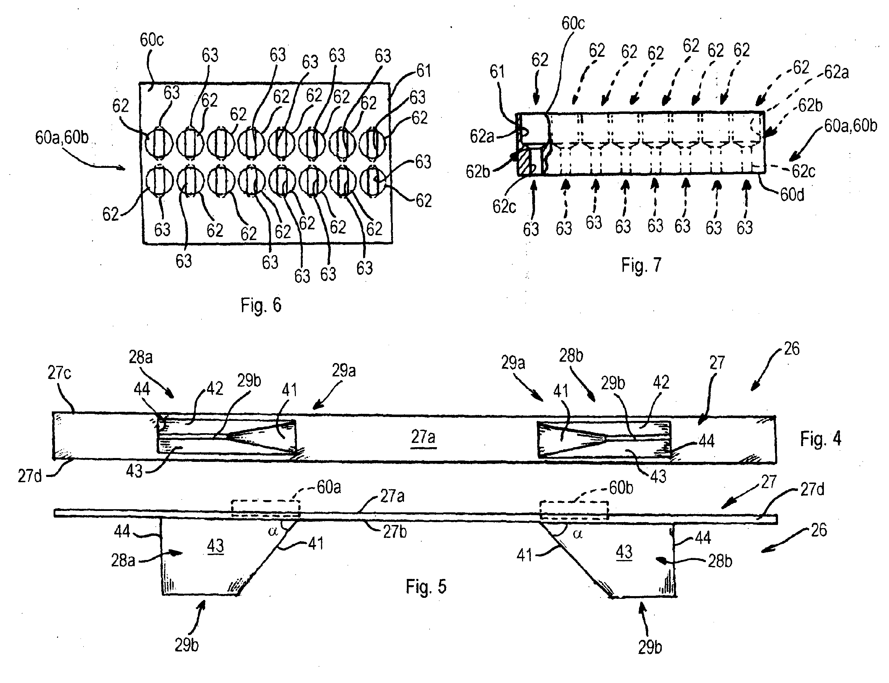

Figures 4 and 5 show a distributor device 26, which can be used in apparatus 1 in place of movable hopper 14. The distributor device 26 comprises a supporting plate portion 27 in the shape of a rectangle and extending longitudinally, a pair of hopper portions 28a, 28b, each of which has a substantially triangular transverse section, and a pair of distributor units 60a, 60b (represented by the broken line).

.In use, distributor 26 is supported by known type of supporting means, for example, a supporting frame (not shown), and positioned above dispenser frame 7.

The supporting plate portion 27 comprises a feed face 27a and a dispensing face 27b, which are parallel and opposite to each other. Two side elements 27c, 27d project from feed face 27a, parallel and opposite to each other, and extending along the entire length of the supporting plate portion 27. When distributor device 26 is inserted in apparatus 1 and positioned there in a manner similar to that envisaged for the movable hopper 14 (i.e. near feed opening 10 of dispenser frame 7), the dispensing face 27b faces the feed opening 10 and the feed face 27a faces collector 13.

Hopper portions 28a, 28b are positioned near the opposite ends of supporting plate portion 27 and project from the latter's dispensing face 27b. Each hopper portion 28a, 28b is provided with a rectangular inlet opening 29a, and an outlet opening 29b, shaped in the form of a slit and arranged parallel to the supporting plate portion 2.7 and to the respective inset opening 29a. When distributor device 26 is inserted in apparatus 1, the outlet opening 29b is adjacent to and aligned with feed opening 10 of dispenser frame 7.

Between the inlet opening 29a and outlet opening 29b there is a rectilinear wall 44, an oblique wall 41 and a pair of further oblique walls 42, 43. The rectilinear wall 44 and oblique wall 41 are shaped in the form of a triangle while the further oblique walls 42, 43 are shaped approximately in the form of a trapezoid rectangle. While the rectilinear wall 44 is arranged substantially at right angles in relation to supporting plate portion 27, oblique wall 41 is inclined in relation to the latter, in such a way that an angle α of approx. 45° is defined between oblique wall 41 and supporting plate portion 27. In use, oblique wall 41 facilitates the flow and reciprocal mixing of the coloured ceramic powders 8 inside each hopper portion 28a, 28b. Figures 6 and 7 show in detail the distributor units 60a, 60b, each of which comprises a body 61, shaped in the form of a parallelepiped and provided with an outlet face 60d and an inlet face 60c, parallel and opposite to each other. Each distributor unit 60a, 60b is mounted on the supporting plate portion 27 of distributor device 26 in such a way that outlet face 60d of distributor unit 60a, 60b is adjacent to feed face 27a of the supporting plate portion 27. Each distributor unit 60a, 60b is maintained in this position by means of side elements 27c, 27d of feed face 27a, with the body 61 of each distributor unit 60a, 60b placed between the side elements. Since the length of each body 61 is less than the length of each inlet opening 29a, each distributor unit 60a, 60b can be positioned near different areas of inlet openings 29a.

A plurality of duct portions 62b is made in the thickness of each body 61. Each duct portion 62b opens near inlet face 60c, by means of a circular-shaped hole 62, and near outlet face 60d, by means of an elongated and approximately rectangular slot 63. Each duct portion 6.2b comprises a cylindrical inlet portion 62a, which narrows to continue into an outlet portion 62c, the transverse section of which resembles the shape of slot 63. When the distributor device 26 is inserted in apparatus 1, each inlet portion 62a receives (through the respective hole 62) a corresponding end of an outlet tube 21 coming from a feeding element (not shown). Each distributor unit 60a, 60b can therefore separately receive as many outlet tubes 21 as there are duct portions 62b with which distributor unit 60a, 60b is provided. Outlet tubes 21 form two groups, each of which feeds a respective distributor unit 60a, 60b.

Distributor unit 60a, 60b shown in Figures 6 and 7 can receive up to 16 outlet tubes 21. In embodiments not shown, distributor units 60a, 60b are present, provided with a number of duct portions 62b more than or less than 16.

In use, unlike what has been described above for the movable hopper 14 with reference to Figures 1 to 3, distributor device 26 does not need to be moved to be able to operate. In fact, the coloured ceramic powders 8 conveyed through outlet tubes 21 towards one and/or the other of the two distributor units 60a, 60b, are dispensed by each outlet tube 21 connected to the respective duct portion 62b of distributor unit 60a, 60b required, when the corresponding slot 63 is above the inlet opening 29a of said hopper portions 28a, 28b, while dispensing of the powders stops when said slot 63 is outside the said inlet opening 29a. The powders dispensed by each outlet tube 21 fall by gravity into the corresponding hopper portion 28a, 28b and come out of its outlet opening, to enter cavity 25 of dispenser frame 7. Depending on the position in which each distributor 60a, 60b finds itself in relation to the inlet opening 29a, it is possible to change the formation of flow area S in cavity 25, which is arranged obliquely and lies between feed opening 10 and lateral column (11 or 12) situated in a position opposite distributor unit 60a, 60b.

The coloured ceramic powders 8 coming out of distributor units 60a, 60b through slots 63 form significantly thin layers which, by overlapping reciprocally in cavity 25, make it possible to reproduce a very likely stratification chromatic effect in exposed face 40a of tiles 40.

In an embodiment not shown, distributor device 26 is provided with known type of driving means, which make it possible to move each distributor unit 60a, 60b in relation to inlet openings 29a according to one and/or the other direction F3 and F4, in relation to the inlet openings 29a. Downline of dispenser frame 7, apparatus 1 comprises a pre-compacting station 30 provided with a pressor belt 31, a cutting station 32 and a known type of ceramic press 33. By depositing the exposed layer 9 on the base layer 6, a semi-finished product 50 is obtained, which is pre-compacted in the known type of pre-compacting station 30, and then cut longitudinally and/or transversely in cutting station 32. The latter, of known type, comprises cutting disks 32a, arranged parallel to direction F1, and further cutting disks 32b, arranged transverse to direction F1. Once it is cut longitudinally and/or transversely, the semi-finished product 50 is then transferred to press 33 by means of a known type of roller conveyor 34. In press 33 the semi-finished product 50 is transformed into an unfired tile 40 intended for being fired by means of known type of apparatuses and procedures.

In an embodiment not shown, tile 40 is obtained starting from a single layer of material in powder form, consisting of coloured ceramic powders 8 and produced according to the method described above. In this embodiment, apparatus 1, provided with movable hopper 14 or distributor device 26 does not comprise the hopper 5 meant for dispensing ceramic material powder 4.

## Claims

1. Distributor means (26) for distributing flowable ceramic materials (8), arranged for being incorporated in an apparatus for forming ceramic products and arranged for distributing said ceramic materials (8) in dispensing means (7) of said apparatus, comprising at least one hopper portion (28a, 28b), at least one distribution portion, said distribution portion comprising at least one distributor unit (60a, 60b) that is shaped in such a way as to separately receive a plurality of conveyor ducts (21) of said ceramic materials (8), a supporting plate portion (27), said at least one hopper portion (28a, 28b) projecting from a dispensing face (27b) of said supporting plate portion (27), **characterized in that** it comprises a pair of said hopper portions (28a, 28b), which are positioned near opposite ends of said supporting plate portion (27), and a pair of said distributor units (60a, 60b), each of said distributor units (60a, 60b) comprising a body (61) in which a plurality of duct portions (62b) is made, opposite ends of said duct portions (62b) opening near corresponding opposite faces (60c, 60d) of said distributor units (60a, 60b), said distributor units (60a, 60b) being mounted on said supporting plate portion (27) in such a way that an outlet face (60d) of each of said distributor units (60a, 60b) is adjacent to a feed face (27a) of said supporting plate portion (27), said feed face (27a) and said dispensing face (27b) being reciprocally parallel and opposite.

2. Distributor means according to claim 1, wherein said duct portions (62b) open through holes (62) near an inlet face (60c) and open through slots (63) near said outlet face (60d), said inlet face (60c) and said outlet face (60d) being included in said opposite faces (60c, 60d).

3. Distributor means according to claim 2, wherein said duct portions (62b) receive corresponding ends of said conveyor ducts (21) through said holes (62).

4. Distributor means according to any preceding claim, wherein said body (61) is mounted on said feed face (27a) of said supporting plate portion (27).

5. Distributor means according to claim 4, wherein said body (61) is movable along said feed face (27a).

6. Distributor means according to any preceding claim, wherein each of said hopper portions (28a, 28b) is provided with an inlet opening (29a) made in the thickness of said supporting plate portion (27).

7. Distributor means according any preceding claim, wherein each of said hopper portions (28a, 28b) comprises an oblique wall (41) such as to define an angle (α) of approximately 45° in relation to said supporting plate portion (27).

8. Apparatus for forming ceramic products (40), comprising distributor means (26) according to any one of claims 1 to 7 arranged for distributing flowable ceramic materials (8), dispensing means (7) arranged for dispensing on a surface (3; 6) a layer (9) formed of a plurality of said flowable ceramic materials (8), said dispensing face (27b) of said distributor means (26) being turned towards said dispensing means (7), duct means (21) arranged for conveying said ceramic materials (8) separately in said distributor means (26) and comprising a plurality of conveyor ducts (21) for each of said ceramic materials (8).

9. Apparatus according to claim 8, and further comprising collector means (13) to which said plurality of conveyor ducts (21) is connected, said collector means (13) comprising a collector (13).

10. Apparatus according to claim 9, wherein said plurality of conveyor ducts (21) is connected to a base portion (19) of said collector (13).

11. Apparatus according to claim 9, or 10, wherein in said collector (13) a plurality of reciprocally separated compartments (15) is made, each of which is arranged for receiving one of said flowable ceramic materials (8).

12. Apparatus according to claim 11, wherein each of said compartments (15) is provided with outlet means (20), said outlet means (20) comprising a plurality of outlet tubes (20) connected to said plurality of conveyor ducts (21).

13. Apparatus according to any one of claims 9 to 12, wherein said collector (13) is mounted on a movable frame (22).

14. Method for producing ceramic products (40), comprising supplying dispensing means (7) with a plurality of flowable ceramic materials (8) and filling said dispensing means (7) only partly through fixed distributor means, dispensing said plurality of flowable ceramic materials (8) by means of said dispensing means (7) on a surface (3; 6) in such a way as to form a layer (9) of said ceramic materials (8) on said surface (3; 6), **characterized in that** said filling said dispensing means (7) only partly is achieved through fixed distributor means (26) according to anyone of claims 1 to 13, by distributing said plurality of flowable ceramic materials (8) by one and/or the other of a pair of distributor units (60a, 60b) into corresponding hopper portions (28a, 28b) positioned near opposite ends of a supporting plate portion (27), by enabling said plurality of flowable ceramic materials (8) to come out of outlet openings (29b) of said hopper portions (28a, 28b) and enter cavity means (25) comprised in said dispensing means (7), so that said plurality of flowable ceramic materials (8) forms an obliquely arranged flow area (S) in said cavity means (7).

## Patentansprüche

1. Verteilereinrichtung (26) zum Verteilen von fließfähigen Keramikmaterialien (8), die angeordnet ist, damit sie in eine Vorrichtung zum Ausbilden von Keramikprodukten eingebaut wird, und zum Verteilen der Keramikmaterialien (8) in einer Ausgabeeinrichtung (7) der Vorrichtung angeordnet ist, mit mindestens einem Trichterteil (28a, 28b), mindestens einem Verteilungsteil, wobei der Verteilungsteil mindestens eine Verteilereinheit (60a, 60b) umfasst, die in einer solchen Weise geformt ist, dass sie separat eine Vielzahl von Förderkanälen (21) der Keramikmaterialien (8) aufnimmt, einem Stützplattenteil (27), wobei der mindestens eine Trichterteil (28a, 28b) von einer Ausgabefläche (27b) des Stützplattenteils (27) vorsteht, **dadurch gekennzeichnet, dass** sie ein Paar der Trichterteile (28a, 28b), die nahe entgegengesetzten Enden des Stützplattenteils (27) angeordnet sind, und ein Paar der Verteilereinheiten (60a, 60b) umfasst, wobei jede der Verteilereinheiten (60a, 60b) einen Körper (61) umfasst, in dem eine Vielzahl von Kanalteilen (62b) hergestellt ist, wobei entgegengesetzte Enden der Kanalteile (62b) nahe entsprechenden entgegengesetzten Flächen (60c, 60d) der Verteilereinheiten (60a, 60b) münden, wobei die Verteilereinheiten (60a, 60b) an dem Stützplattenteil (27) in einer solchen Weise montiert sind, dass eine Auslassfläche (60d) von jeder der Verteilereinheiten (60a, 60b) zu einer Zufuhrfläche (27a) des Stützplattenteils (27) benachbart ist, wobei die Zufuhrfläche (27a) und die Ausgabefläche (27b) wechselseitig parallel und entgegengesetzt sind.

2. Verteilereinrichtung nach Anspruch 1, wobei die Kanalteile (62b) durch Löcher (62) nahe einer Einlassfläche (60c) münden und durch Schlitze (63) nahe der Auslassfläche (60d) münden, wobei die Einlassfläche (60c) und die Auslassfläche (60d) in den entgegengesetzten Flächen (60c, 60d) enthalten sind.

3. Verteilereinrichtung nach Anspruch 2, wobei die Kanalteile (62b) entsprechende Enden der Förderkanäle (21) durch die Löcher (62) aufnehmen.

4. Verteilereinrichtung nach einem vorangehenden Anspruch, wobei der Körper (61) an der Zufuhrfläche (27a) des Stützplattenteils (27) montiert ist.

5. Verteilereinrichtung nach Anspruch 4, wobei der Körper (61) entlang der Zufuhrfläche (27a) beweglich ist.

6. Verteilereinrichtung nach einem vorangehenden Anspruch, wobei jeder der Trichterteile (28a, 28b) mit einer Einlassöffnung (29a) versehen ist, die in der Dicke des Stützplattenteils (27) hergestellt ist.

7. Verteilereinrichtung nach einem vorangehenden Anspruch, wobei jeder der Trichterteile (28a, 28b) eine schräge Wand (41) umfasst, um einen Winkel (α) von ungefähr 45° in Bezug auf den Stützplattenteil (27) zu definieren.

8. Vorrichtung zum Ausbilden von Keramikprodukten (40), die eine Verteilereinrichtung (26) nach einem der Ansprüche 1 bis 7, die zum Verteilen von fließfähigen Keramikmaterialien (8) angeordnet ist, eine Ausgabeeinrichtung (7), die zum Ausgeben einer Schicht (9), die aus einer Vielzahl der fließfähigen Keramikmaterialien (8) ausgebildet ist, auf eine Oberfläche (3; 6) angeordnet ist, wobei die Ausgabefläche (27b) der Verteilereinrichtung (26) in Richtung der Ausgabeeinrichtung (7) gewandt ist, eine Kanaleinrichtung (21), die zum Befördern der Keramikmaterialien (8) separat in der Verteilereinrichtung (26) angeordnet ist und eine Vielzahl von Förderkanälen (21) für jedes der Keramikmaterialien (8) umfasst, umfasst.

9. Vorrichtung nach Anspruch 8, die ferner eine Sammlereinrichtung (13) umfasst, mit der die Vielzahl von Förderkanälen (21) verbunden ist, wobei die Sammlereinrichtung (13) einen Sammler (13) umfasst.

10. Vorrichtung nach Anspruch 9, wobei die Vielzahl von Förderkanälen (21) mit einem Basisteil (19) des Sammlers (13) verbunden ist.

11. Vorrichtung nach Anspruch 9 oder 10, wobei in dem Sammler (13) eine Vielzahl von wechselseitig getrennten Fächern (15) hergestellt ist, von denen jedes zum Aufnehmen von einem der fließfähigen Keramikmaterialien (8) angeordnet ist.

12. Vorrichtung nach Anspruch 11, wobei jedes der Fächer (15) mit einer Auslasseinrichtung (20) versehen ist, wobei die Auslasseinrichtung (20) eine Vielzahl von Auslassrohren (20) umfasst, die mit der Vielzahl von Förderkanälen (21) verbunden sind.

13. Vorrichtung nach einem der Ansprüche 9 bis 12, wobei der Sammler (13) an einem beweglichen Rahmen (22) montiert ist.

14. Verfahren zur Herstellung von Keramikprodukten (40), das das Versorgen einer Ausgabeeinrichtung (7) mit einer Vielzahl von fließfähigen Keramikmaterialien (8) und das nur teilweise Füllen der Ausgabeeinrichtung (7) durch eine feste Verteilereinrichtung, das Ausgeben der Vielzahl von fließfähigen Keramikmaterialien (8) mittels der Ausgabeeinrichtung (7) auf eine Oberfläche (3; 6) in einer solchen Weise, dass eine Schicht (9) der Keramikmaterialien (8) auf der Oberfläche (3; 6) ausgebildet wird, umfasst, **dadurch gekennzeichnet, dass** das nur teilweise Füllen der Ausgabeeinrichtung (7) durch eine feste Verteilereinrichtung (26) nach einem der Ansprüche 1 bis 13 durch Verteilen der Vielzahl von fließfähigen Keramikmaterialien (8) durch die eine und/oder die andere eines Paars von Verteilereinheiten (60a, 60b) in entsprechende Trichterteile (28a, 28b) erreicht wird, die nahe entgegengesetzten Enden eines Stützplattenteils (27) angeordnet sind, indem ermöglicht wird, dass die Vielzahl von fließfähigen Keramikmaterialien (8) aus Auslassöffnungen (29b) der Trichterteile (28a, 28b) gelangen und in eine Hohlraumeinrichtung (25) eintreten, die in der Ausgabeeinrichtung (7) enthalten ist, so dass die Vielzahl von fließfähigen Keramikmaterialien (8) einen schräg angeordneten Fließbereich (S) in der Hohlraumeinrichtung (7) bildet.

## Revendications

1. Moyens distributeurs (26) pour distribuer des matériaux céramiques fluides (8), moyens adaptés pour être englobés dans un dispositif destiné à former des produits céramiques, et adaptés pour distribuer lesdits matériaux céramiques (8) dans des moyens répartiteurs (7) dudit dispositif, comprenant au moins une partie formant trémie (28a, 28b), au moins une partie de distribution, ladite partie de distribution comprenant au moins une unité distributrice (60a, 60b) qui est conformée de manière à recevoir séparément une pluralité de conduits d'acheminement (21) desdits matériaux céramiques (8), une partie formant plaque de support (27), ladite au moins une partie formant trémie (28a, 28b) faisant saillie d'une face répartitrice (27b) de ladite partie formant plaque de support (27), ***caractérisés en ce* qu'**ils comprennent deux desdites parties formant trémie (28a, 28b), qui sont positionnées à proximité d'extrémités opposées de ladite partie formant plaque de support (27), et deux desdites parties formant unités distributrices (60a, 60b), chacune desdites unités distributrices (60a, 60b) comprenant un corps (61) dans lequel sont ménagées une pluralité de portions (62b) de conduits, des extrémités opposées desdites portions (62b) de conduit débouchant à proximité de faces opposées correspondantes (60c, 60d) desdites unités distributrices (60a, 60b), lesdites unités distributrices (60a, 60b) étant montées sur ladite partie formant plaque de support (27) de telle façon qu'une face de sortie (60d) de chacune desdites unités distributrices (60a, 60b) soit adjacente à une face d'alimentation (27a) de ladite portion formant plaque de support (27), ladite face d'alimentation (27a) et ladite face répartitrice (27b) étant parallèles et opposées l'une à l'autre.

2. Moyens distributeurs selon la revendication 1, dans lesquels lesdites portions (62b) de conduit s'ouvrent par des orifices (62) à proximité d'une face d'entrée (60c) et s'ouvrent par des fentes (63) à proximité de ladite face de sortie (60d), ladite face d'entrée (60c) et ladite face de sortie (60d) étant comprises dans lesdites faces opposées (60c, 60d).

3. Moyens distributeurs selon la revendication 2, dans lesquels lesdites portions (62b) de conduit reçoivent des extrémités correspondantes desdits conduits d'acheminement (21) à travers lesdits orifices (62).

4. Moyens distributeurs selon l'une quelconque des revendications précédentes, dans lesquels ledit corps (61) est monté sur ladite face d'alimentation (27a) de ladite partie formant plaque de support (27).

5. Moyens distributeurs selon la revendication 4, dans lesquels ledit corps (61) est mobile le long de ladite face d'alimentation (27a).

6. Moyens distributeurs selon l'une quelconque des revendications précédentes, dans lesquels chacune desdites parties formant trémie (28a, 28b) est pourvue d'une ouverture d'entrée (29a) ménagée dans l'épaisseur de ladite partie formant plaque de support (27).

7. Moyens distributeurs selon l'une quelconque des revendications précédentes, dans lesquels chacune des parties formant trémie (28a, 28b) comprend une paroi oblique (41) propre à définir un angle (α) d'environ 45° avec ladite partie formant plaque de support (27).

8. Dispositif destiné à former des produits céramiques (40), comprenant des moyens distributeurs (26) selon l'une quelconque des revendications 1 à 7, prévus pour distribuer des matériaux céramiques fluides (8), des moyens répartiteurs (7) prévus pour répartir sur une surface (3 ; 6) une couche (9) faite d'une pluralité desdits matériaux céramiques fluides (8), ladite face répartitrice (27b) desdits moyens distributeurs (26) étant orientée vers lesdits moyens répartiteurs (7), des moyens de conduits (21) prévus pour acheminer séparément lesdits matériaux céramiques (8) dans lesdits moyens distributeurs (26) et comprenant une pluralité de conduits d'acheminement (21) pour chacun desdits matériaux céramiques (8).

9. Dispositif selon la revendication 8, et comprenant en outre des moyens collecteurs (13) auxquels sont raccordés ladite pluralité de conduits d'acheminement (21), lesdits moyens collecteurs (13) comprenant un collecteur (13).

10. Dispositif selon la revendication 9, dans lequel ladite pluralité de conduits d'acheminement (21) est raccordée à une partie formant base (19) dudit collecteur (13).

11. Dispositif selon la revendication 9 ou 10, dans lequel, dans ledit collecteur (13) sont ménagés une pluralité de compartiments (15) séparés les uns des autres, chacun prévu pour recevoir l'un desdits matériaux céramiques fluides (8).

12. Dispositif selon la revendication 11, dans lequel chacun desdits compartiments (15) est pourvu de moyens de sortie (20), lesdits moyens de sortie (20) comprenant une pluralité de tubes de sortie (20) raccordés à ladite pluralité de conduits d'acheminement (21).

13. Dispositif selon l'une quelconque des revendications 9 à 12, dans lequel ledit collecteur (13) est monté sur un cadre mobile (22).

14. Procédé de production de produits céramiques (40), comprenant l'alimentation de moyens répartiteurs (7) avec une pluralité de matériaux céramiques fluides (8) et le remplissage, de manière partielle seulement, desdits moyens répartiteurs (7), à travers des moyens distributeurs fixes, la répartition de ladite pluralité de matériaux céramiques fluides (8) au moyen desdits moyens répartiteurs (7), sur une surface (3 ; 6) de manière à former une couche (9) desdits matériaux céramiques (8) sur ladite surface (3 ; 6), ***caractérisé en ce que*** ledit remplissage desdits moyens répartiteurs (7) d'une manière partiellement seulement est réalisé à travers des moyens distributeurs fixes (26) selon l'une quelconque des revendications 1 à 13, en distribuant ladite pluralité de matériaux céramiques fluides (8) avec l'une et/ou l'autre de deux unités distributrices (60a, 60b) dans des parties correspondantes formant trémie (28a, 28b) positionnées à proximité d'extrémités opposées d'une partie formant plaque de support (27), en permettant à ladite pluralité de matériaux céramiques fluides (8) de sortir d'ouvertures de sortie (29b) desdites parties formant trémie (28a, 28b) et d'entrer dans des moyens de cavité (25) compris dans lesdits moyens répartiteurs (7), de façon que ladite pluralité de matériaux céramiques fluides (8) forment une zone (S) d'écoulement disposée obliquement dans lesdits moyens de cavité (7).
